# EUROPEAN PATENT APPLICATION

(11) **EP 3 816 654 A1**
(43) Date of publication of application: **05.05.2021**
(21) Application number: 19824779.3
(22) Date of filing: 07.05.2019
(51) Int. Cl.: G01S 7/40, G01S 7/02, G01S 13/93

(54) **RADAR DEVICE AND RADAR SYSTEM**

(30) Priority: 28.06.2018 JP 2018122861
(71) Applicant: HITACHI AUTOMOTIVE SYSTEMS, LTD., Hitachinaka-shi Ibaraki 312-8503 (JP)
(72) Inventor: AKAMINE, Yukinori, Tokyo 100-8280 (JP); TANAKA, Saki, Tokyo 100-8280 (JP); KITAYAMA, Akira, Tokyo 100-8280 (JP); KURODA, Hiroshi, Hitachinaka-shi, Ibaraki 312-8503 (JP)
(74) Representative: MERH-IP Matias Erny Reichl Hoffmann Patentanwälte PartG mbB
(86) International application number: PCT/JP2019/018304
(87) International publication number: WO 2020/003743

(57) **Abstract**

Provided is technique that can maintain or improve angle resolution by sufficient calibration even when different errors corresponding to directions of arrival of radio waves occur. A radar device 1 is provided with an array antenna 6 including a plurality of reception antennas, a reception analog circuit 7 including a plurality of reception circuits, a digital circuit (a digital unit 3), and a memory 12 that stores a plurality of pieces of calibration data 14 set to calibrate an error occurring in the array antenna 6 and the reception analog circuit 7. The digital circuit approximates and extracts a direction of arrival of radio waves from a target object by executing a digital beam forming processing on a digital signal of a reception signal SR that passes through the reception analog circuit 7, selects a piece of calibration data from the plurality of pieces of calibration data 14 corresponding to the extracted direction of arrival of radio waves, executes a calibration processing on the digital signal using the selected calibration data, and executes a processing of calculating an angle based on a signal after the calibration processing.

## Description

### Technical Field

The present invention relates to a technique such as a radar device. The invention relates to a technique for detecting a direction of an object, an angle indicating the direction, or the like using an array antenna including a plurality of reception antennas in a radar device.

### Background Art

A radar device such as a millimeter wave radar may have a function of detecting a direction of an object (referred to as a target object or the like) or an angle indicating the direction as viewed from the radar device. In this case, the radar device is provided with an array antenna including a plurality of reception antennas. The radar device can calculate the direction of the target object by performing a processing such as a known super resolution processing based on a reception signal of the array antenna. When a wavelength of radio waves used by the millimeter wave radar is less than 1 cm (that is, in a unit of millimeter), a radio frequency is approximately 30 GHz to 300 GHz.

Examples of an application of the radar device include automatic driving of a vehicle. In this application, various assumed scenes are considered for measuring a position or a direction of a target object such as a vehicle viewed from a host vehicle. An example of one of the assumed scenes is prevention of a rear-end collision in a traffic congestion on a highway. For example, when a vehicle travels at a speed of 100 km/h, it is necessary to recognize a state that, for example, a vehicle is stopping in which lane ahead at a position of 150 m or more from a rear end of a traffic congestion considering control time, a stopping distance, and the like. Here, when a distance from the host vehicle is 150 m, an angle between the host vehicle in an own lane and a stopped vehicle in an adjacent lane is less than approximately 1 degree. That is, angle resolution is required to be less than 1 degree in this case. In respect of recognizing such a target object at a distance of 150 m, a camera or a laser radar (light detection and ranging and laser imaging detection and ranging (LiDAR)) in the related art cannot obtain sufficient angle resolution.

Therefore, a radar device using radio waves such as millimeter waves and sub-millimeter waves is used as an alternative sensor. However, the radar device needs to achieve high resolution with an angle of less than 1 degree. In order to attain high resolution by the radar device, as a signal processing technique, it is necessary to use a super resolution method represented by a known multiple signal classification (MUSIC) method or a known estimation of signal parameters via rotational invariance techniques (ESPRIT) method.

An array antenna is used in the super resolution method. Various kinds of errors may occur among a plurality of reception antennas of the array antenna and among reception circuits of a reception analog circuit connected to the array antenna. Examples of the errors include an amplitude/phase error, and errors (space errors) from interference among antennas, mutual coupling, and a design value of an antenna interval. When such errors occur, angle resolution may deteriorate extremely. In order to maintain or achieve high resolution, a countermeasure technique is to perform calibration on these errors.

A calibration method includes, for example, a method of using a calibration matrix proposed in PTL 1. In this method, the calibration matrix is used to calibrate errors such as an amplitude/phase error and mutual coupling. PTL 1 discloses a method of using an error model matrix (corresponding to the calibration matrix). In PTL 1, a single error model matrix is determined by minimizing a sum of absolute values of differences between a plurality of known wave sources and an estimated direction.

The calibration method further includes a method disclosed in PTL 2. In PTL 2, phases are aligned by phase correction for each reception antenna, and then directions of arrival of radio waves are calculated by a space fast Fourier transform (FFT). PTL 2 discloses an example of a technique related to correction of a phase error. In this method, the phase correction corresponds to beam forming in which phases are aligned in a reference direction, and errors related to interference among antennas and an antenna interval are not corrected. This method is not intended for a super resolution processing for an angle calculation.

### Citation List

### Patent Literature

PTL 1: JP-A-2015-152335
PTL 2: JP-A-2008-304417

### Non Patent Literature

NTL 1: Hiroyoshi Yamada, "Array Calibration Technique for High-Resolution Direction of Arrival Estimation", Transactions of the Institute of Electronics, Information and Communication Engineers. B2009, Vol. J92-BNo. 9, pp. 1308-1321

### Summary of Invention

### Technical Problem

In a radar device that performs a super resolution processing so as to detect an angle indicating a direction using an array antenna, different errors corresponding to directions of arrival of radio waves from a target object may occur in the array antenna and a reception analog circuit. In this case, calibration cannot be sufficiently performed and angle resolution cannot be maintained or improved in a calibration method using a single calibration matrix.

An object of the invention is to provide a technique that can maintain or improve angle resolution by sufficient calibration even when different errors corresponding to directions of arrival of radio waves occur in a technique of a radar device including an array antenna.

### Solution to Problem

A radar device or the like will be described as a representative embodiment of the invention, and has the following configuration. A radar device according to an embodiment has a function of detecting an angle indicating a direction of a target object. The radar device is provided with an array antenna including a plurality of reception antennas, a reception analog circuit including a plurality of reception circuits connected to the plurality of reception antennas of the array antenna, a digital circuit connected to the reception analog circuit, and a memory that stores a plurality of pieces of calibration data set to calibrate an error occurring in the array antenna and the reception analog circuit. The digital circuit approximates and extracts a direction of arrival of radio waves from the target object by executing a digital beam forming processing on a digital signal of a reception signal that passes through the reception analog circuit, selects a piece of calibration data from the plurality of pieces of calibration data corresponding to the extracted direction of arrival of radio waves, executes a calibration processing on the digital signal of the reception signal using the selected calibration data, and executes a processing of calculating the angle based on a signal after the calibration processing.

### Advantageous Effect

According to the representative embodiment of the invention, angle resolution can be maintained or improved by sufficient calibration even when different errors corresponding to directions of arrival of radio waves occur in a technique of a radar device including an array antenna.

### Brief Description of Drawings

[FIG. 1] FIG. 1 is a diagram showing a configuration of a radar device according to an embodiment of the invention.
[FIG. 2] FIG. 2 is a diagram mainly showing a configuration of an analog unit in the radar device according to the embodiment.
[FIG. 3] FIG. 3 is a diagram mainly showing a configuration of a digital unit in the radar device according to the embodiment.
[FIG. 4] FIG. 4 is a diagram schematically showing directions of arrival of radio waves to an array antenna, errors, and the like in a configuration according to the embodiment and a configuration according to a comparative example.
[FIG. 5] FIG. 5 is a diagram showing a calibration processing using a single calibration matrix in the configuration according to the embodiment and the configuration according to the comparative example.
[FIG. 6] FIG. 6 is an image diagram showing a spectrum with respect to a direction of arrival using various methods in the configuration according to the embodiment and the configuration according to the comparative example.
[FIG. 7] FIG. 7 is a diagram showing a space FFT spectrum and a sweep area with respect to a direction of arrival.
[FIG. 8] FIG. 8 is a diagram showing a space FFT spectrum (a sweep area A) after space filtering and a spectrum after calibration.
[FIG. 9] FIG. 9 is a diagram showing a space FFT spectrum (a sweep area B) after space filtering and a spectrum after calibration.
[FIG. 10] FIG. 10 is a diagram showing an outline of a case in which a calibration matrix is generated by an interpolation processing in a radar device according to a modification of the embodiment.
[FIG. 11] FIG. 11 is a diagram showing a configuration of a digital unit in the radar device according to the modification of the embodiment.

### Description of Embodiments

Hereinafter, embodiments of the invention will be described in detail with reference to drawings. The same components are denoted by the same reference numerals in principle in all of the drawings for describing the embodiments, and repeated description is omitted.

### [Problem]

Problems and the like will be supplemented and described. There is a problem of resolution deterioration due to an error occurring in an array antenna and a reception analog circuit in a radar device that executes a super resolution processing to detect an angle using the array antenna. A countermeasure technique is to perform calibration on the error. For example, a signal processing circuit provided between the reception analog circuit of the array antenna of the radar device and a super resolution processing circuit executes a calibration processing on a digital signal including reception signals of reception antennas using a calibration matrix related to the error. Accordingly, it is expected that angle resolution can be maintained or improved by executing the super resolution processing using a signal after calibration.

However, when the above-described calibration is executed, among various errors generated in the array antenna and the reception analog circuit, such as an error from a design value of an antenna interval, different errors corresponding to directions of arrival of radio waves from a target object to the reception antennas may occur. Therefore, a radar device using a calibration method in which a single calibration matrix is used in a technique example in the related art cannot execute sufficient calibration on the different errors corresponding to directions of arrival of radio waves.

In other words, when the different errors corresponding to directions of arrival of radio waves occur, required optimal calibration contents corresponding to the different errors are different, and corresponding calibration matrices are different. Since the radar device in the technique example in the related art uses a single calibration matrix, it is considered that the radar device does not execute calibration using each calibration matrice on a respective one of the different errors corresponding to directions of arrival of radio waves.

As in an example in PTL 1, in the calibration method using a single calibration matrix, the single calibration matrix strongly depends on a certain direction of arrival of radio waves. In such a case, there is a possibility that calibration cannot be sufficiently executed in a result of a calibration processing using the single calibration matrix. That is, depending on directions of arrival of radio waves, the errors may be hardly eliminated, errors may increase as a result, or the like. It is considered that deterioration of angle resolution may occur.

As in an example in NTL 1, when errors are changed corresponding to directions of arrival of radio waves in a method of executing calibration by a signal processing circuit unit, it is difficult to achieve sufficient correspondence in calibration using a single calibration matrix. That is, errors also remain in a calibration result of reception signals, a result of a super resolution processing, and the like. As a result, in output information of a radar device such as a distance, a speed, and an angle, particularly angle accuracy or resolution is reduced.

Based on a result of an experiment or study, the inventor has found that the different errors corresponding to directions of arrival of radio waves from the target object may occur in the array antenna, necessary or effective calibration corresponding to the different errors may differ, and the like. The inventor has found that, for example, sufficient calibration cannot be executed in a calibration method using a single calibration matrix as in the technique example in the related art during a super resolution processing for calculating an angle indicating a direction with high accuracy.

Specifically, a radar device according to a comparative example has the following configuration and has corresponding problems. In the radar device according to the comparative example, before a super resolution processing, a necessary space averaging and wave number estimation processing for executing the super resolution processing is executed on a reception signal including an error occurring in an array antenna and a reception analog circuit. The radar device according to the comparative example executes a calibration processing on a signal of a result of the space averaging and wave number estimation processing using a signal calibration matrix. The radar device according to the comparative example calculates an angle by executing the super resolution processing on a signal of a result of the calibration processing. In the comparative example, a calibration processing is executed on information including an error that is already present in the reception signal, for example, a result of the space averaging and wave number estimation processing. An error is present in the result of the space averaging and wave number estimation processing. Therefore, the error may not be eliminated even when the calibration processing is executed on the information including the error. Even when the super resolution processing is executed on a signal after the calibration processing, deterioration of angle resolution may occur depending on directions of arrival of radio waves.

### [Embodiment]

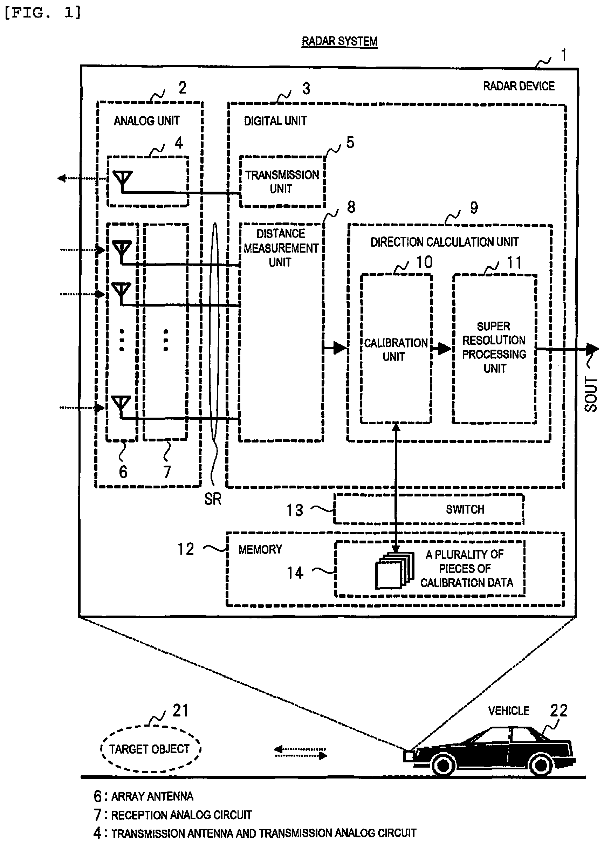

A radar device and the like according to an embodiment of the invention will be described with reference to FIGS. 1 to 11. The inventor has devised a mechanism of selecting and applying a suitable calibration matrix from a plurality of calibration matrices corresponding to directions of arrival of radio waves for the radar device according to the embodiment so as to deal with different errors corresponding to the directions of arrival of radio waves. The radar device according to the embodiment executes, by a signal processing circuit unit provided between a reception analog circuit connected to an array antenna and a super resolution processing circuit, a calibration processing on a digital signal of a reception signal using calibration data selected from a plurality of pieces of calibration data. The plurality of pieces of calibration data each include a calibration matrix for each of the directions of arrival of radio waves that are assumed in advance.

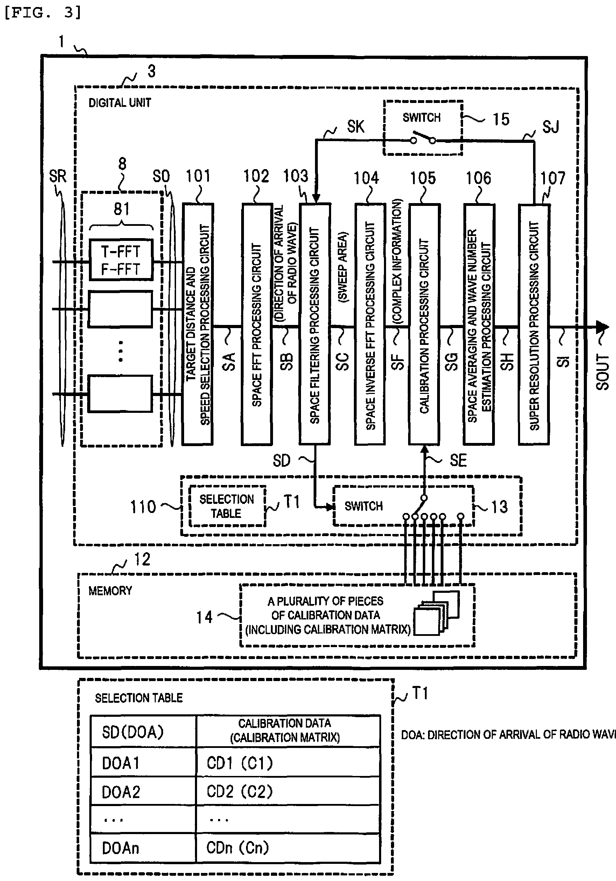

Therefore, based on the reception signal, the radar device according to the embodiment executes a digital beam forming processing to estimate a direction of arrival of radio waves as an approximation and extract information. The radar device selects a calibration matrix from a plurality of calibration matrices according to the estimated and extracted direction of arrival of radio waves, and applies the calibration matrix to a calibration processing. A signal after the calibration processing is a signal in which different errors corresponding to directions of arrival of radio waves are eliminated or reduced. The radar device calculates an angle by executing a space averaging and wave number estimation processing and a super resolution processing on a signal after the calibration processing (see FIG. 3 and the like). Resolution refers to resolution or accuracy during detection, calculation, separation, and the like related to an angle indicating a direction of a target object. Specifically, angle resolution is targeted at high resolution of less than 1 degree in the invention.

### [(1) Radar Device]

FIG. 1 shows a configuration of a radar system including a radar device 1 according to the embodiment. The radar device 1 is mounted on a vehicle 22. The radar system includes the radar device 1, the vehicle 22 mounted with the radar device 1, or an in-vehicle system including an engine control unit of the vehicle 22 and the like.

The radar device 1 includes an analog unit 2 including an array antenna 6, a digital unit 3 connected with the analog unit 2, a memory 12, and a switch 13. The analog unit 2 is an analog circuit and includes a transmission antenna and a transmission analog circuit 4, an array antenna 6, and a reception analog circuit 7. The array antenna 6 includes a plurality of reception antennas. The reception analog circuit 7 includes a plurality of reception circuits each connected to a respective one of lines of the plurality of reception antennas of the array antenna 6.

The digital unit 3 is a digital circuit and includes a distance measurement unit 8 and a direction calculation unit 9. The distance measurement unit 8 measures a distance to a target object 21 and includes a circuit for executing an FFT processing. The direction calculation unit 9 calculates a direction (an angle indicating a direction) and includes a calibration unit 10 and a super resolution processing unit 11. The calibration unit 10 includes a circuit that executes a calibration processing. The super resolution processing unit 11 includes a circuit that executes a super resolution processing.

A plurality of pieces of calibration data 14 are stored and set in the memory 12. The plurality of pieces of calibration data 14 are calibration data for each direction of arrival. Each piece of the plurality of pieces of calibration data includes at least a calibration matrix. The calibration data may include not only the calibration matrix but also other information used for a calibration processing. The switch 13 is an element that selects a piece of calibration data from the plurality of pieces of calibration data 14 and switches to apply the calibration data to a calibration processing (the calibration unit 10).

A transmission unit 5 of the digital unit 3 executes a transmission processing when transmitting detection radio waves (transmission waves). A transmission signal is generated in the transmission antenna and the transmission analog circuit 4 based on the processing of the transmission unit 5, and transmission waves are output from the transmission antenna based on the transmission signal. When the transmission waves hit the target object 21, a part of reflected waves is returned as incoming waves. The array antenna 6 receives the incoming waves. A signal received by each reception antenna of the array antenna 6 is processed via the reception analog circuit 7 and becomes a digital signal, and the digital signal is input into the digital unit 3 as a reception signal SR. The distance measurement unit 8 measures a distance to the target object 21 and a speed of the target object 21 based on the reception signal SR. The direction calculation unit 9 calculates an angle indicating a direction of the target object 21 based on the reception signal SR. Information including a distance to the target object 21, a speed and a direction (an angle) of the target object 21 is output from the digital unit 3 as radar device information SOUT.

In the radar system, the radar device 1 is provided, for example, at a predetermined position of a front part of the vehicle 22 so as to face a travel direction of the vehicle. The radar system detects, by the radar device 1, a distance to the target object 21, a speed and a direction (an angle) of the target object 21 that is present in a surrounding environment including an area ahead of the vehicle 22. The radar device 1 outputs radar output information SOUT including the detected distance to the target object, and the detected speed and direction (angle) of the target object. An engine control unit (ECU) or the like in the vehicle 22 controls the vehicle 22 using the radar output information SOUT of the radar device 1. For example, the engine control unit performs collision prevention control. The engine control unit determines a state in which, for example, at which angle position a vehicle is present at a position of 150 m ahead of the vehicle 22. At this time, angle resolution is less than 1 degree. The engine control unit executes brake control and the like to prevent a collision when, for example, another vehicle is stopped at a position of 150 m ahead of the vehicle 22 in a lane in which the vehicle 22 is traveling.

### [(2) Analog Unit]

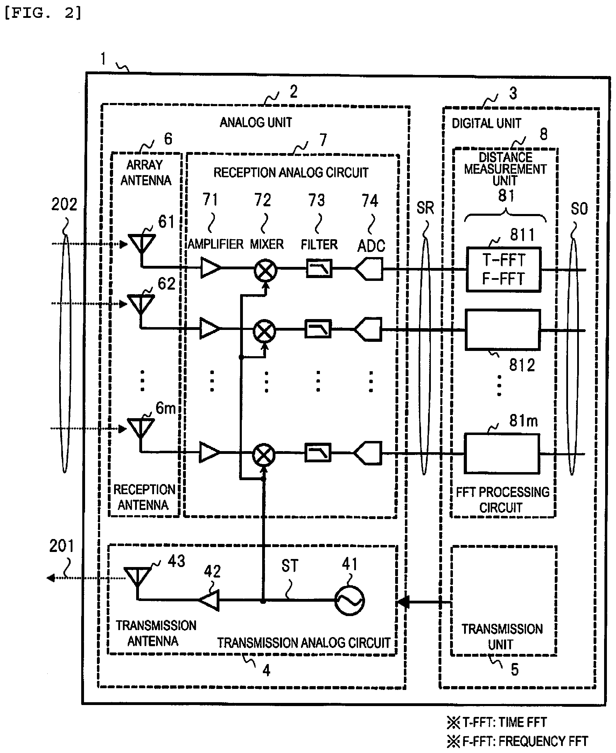

FIG. 2 mainly shows a configuration of the analog unit 2. The transmission antenna and the transmission analog circuit 4 include a synthesizer 41, an amplifier 42, a transmission antenna 43, and the like. A chirp signal generated using the synthesizer 41 is often used as a transmission signal ST. The chirp signal is a signal obtained by linearly transitioning a frequency over time. The transmission signal ST is amplified via the amplifier 42 and is transmitted from the transmission antenna 43 as transmission waves 201. A part of reflected waves obtained by reflecting the transmission waves 201 by the target object 21 is returned as received waves (incoming waves) 202, and the received waves 202 are received by the array antenna 6.

The array antenna 6 includes reception antennas 61 to 6m as a plurality of (m) reception antennas. Signals received by the reception antennas (the reception antennas 61 to 6m) are processed by being input into reception circuits of a plurality of (m) lines in the reception analog circuit 7, and reception signals SR including the processed signals are input to the digital unit 3. An error corresponding to a characteristic or implementation of a circuit or the like may also occur in reception circuits of the plurality of (m) lines in the reception analog circuit 7. The error is also a calibration target.

For each line of a reception antenna, the reception analog circuit 7 includes, as a reception circuit, an amplifier 71, a mixer 72, a filter 73, and an analog-to-digital converter (ADC) 74. A reception signal of a reception antenna is amplified by the amplifier 71 and down-converted by the mixer 72. The mixer 72 is a frequency converter. At this time, the mixer 72 uses the transmission signal ST from the synthesizer 41 as a local signal. Accordingly, a signal having a frequency corresponding to a time difference between the transmission signal ST and the reception signal, that is, a distance to the target object 21, is output from the mixer 72. An analog signal that is an output signal of the mixer 72 is subject to a filtering processing via the filter 73, and then is input into the ADC 74 and converted into a digital signal. A reception signal SR that is a digital signal from the ADC 74 is transmitted to the digital unit 3, and is first input into the distance measurement unit 8.

In the digital unit 3, first, the distance measurement unit 8 executes an FFT processing on each of a plurality of reception signals of the reception signal SR by an FFT processing circuit 81. The FFT processing is a two-dimensional FFT processing that includes both a time FFT (indicated by T-FFT) and a frequency FFT (indicated by F-FFT) . In the configuration example in FIG. 2, the distance measurement unit 8 includes a plurality of (m) FFT processing circuits 811 to 81m that are arranged in parallel corresponding to a plurality of (m) of lines of the reception analog circuit 7 and the reception signals SR. The distance measurement unit 8 calculates an average value based on, for example, results of the plurality of (m) FFT processing circuits 811 to 81m. In the FFT processing, a distribution corresponding to distances can be grasped by the frequency FFT, and a distribution corresponding to speeds can be grasped by the time FFT. A distance refers to a distance from a position of the radar device 1 to a position of the target object 21. A speed refers to a relative speed when the position of the target object 21 is viewed from the position of the radar device 1.

As a known technique, the radar device 1 can grasp a distribution of the distances and the speeds on two axes by executing the two-dimensional time and frequency FFT processings in this manner. This distribution is obtained as, for example, a diagram or an image in which values are plotted on a mesh plane of two axes that are a distance axis and a speed axis. The radar device 1 stores, in a memory, information on the distance and the speed obtained here and outputs the information as a part of the radar output information SOUT. The distance measurement unit 8 is not limited to the configuration example described above.

Although the memory 12 is provided outside the analog unit 2 and the digital unit 3 in the configuration example of the radar device 1 according to the embodiment, the invention is not limited thereto, and may include a memory inside the digital unit 3, or may include a plurality of memories. A memory may be provided outside the radar device 1 in the radar system. The digital unit 3 may appropriately store data and a value for a processing in a memory.

### [(3) Digital Unit]

FIG. 3 mainly shows a configuration of the digital unit 3. The radar device 1 executes, by the FFT processing circuit 81, an FFT processing on the reception signal SR after the signal SR passes through the reception analog circuit 7 of the array antenna 6 so as to measure a distance by the distance measurement unit 8 of the digital unit 3. The radar device 1 obtains a signal S0 after the FFT processing. The signal S0 includes the above-described information on the distance and the speed.

A more detailed implementation configuration example of the direction calculation unit 9 in FIG. 1 is shown in the configuration example of the digital unit 3 in FIG. 3. The digital unit 3 sequentially includes, downstream the distance measurement unit 8, a target distance and speed selection processing circuit 101, a space FFT processing circuit 102, a space filtering processing circuit 103, a space inverse FFT processing circuit 104, a calibration processing circuit 105, a space averaging and wave number estimation processing circuit 106, and a super resolution processing circuit 107.

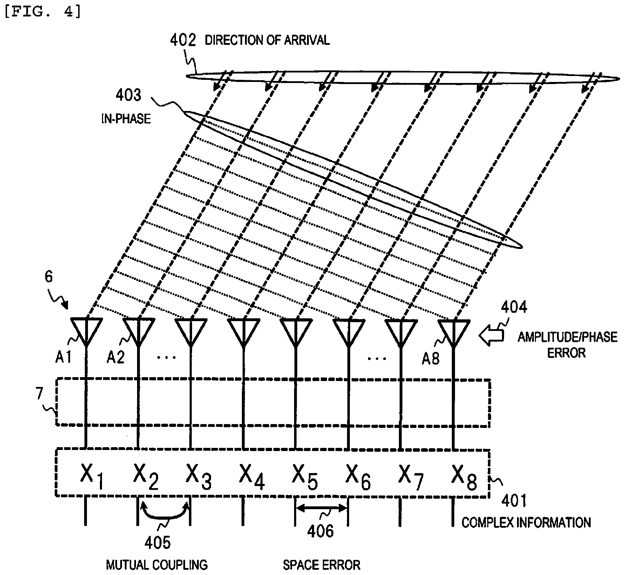

In the digital unit 3, the target distance and speed selection processing circuit 101 performs a processing of selecting a target distance and speed from the signal S0, and obtains a processed signal SA. The target distance and speed refer to a distance and a speed to be processed when a calculation in a subsequent direction is to be executed. The processing of the target distance and speed selection processing circuit 101 is a processing of selecting and determining the target distance and speed based on a distance and speed distribution in the signal S0 after the FFT processing of the distance measurement unit 8. Accordingly, it is possible to grasp complex information (complex information 401 in FIG. 4) indicating an amplitude and a phase of a line of each reception circuit of the array antenna 6 at the target distance and speed as a signal SA. The complex information is information in which an amplitude and a phase are represented by a complex number (having a real part and an imaginary part) .

The digital unit 3 executes, by the space FFT processing circuit 102, a space FFT processing on the signal SA as one pre-processing related to a processing of the super resolution processing circuit 107. The digital unit 3 estimates a direction of arrival DOA of radio waves as an approximation and obtains a signal SB including the direction of arrival DOA of radio waves by the space FFT processing. The space FFT processing is an example of a digital beam forming processing.

Thereafter, the digital unit 3 executes a space filtering processing on the signal SB by the space filtering processing circuit 103. Specifically, the space filtering processing includes a radio wave arrival direction extraction processing and a sweep area extraction processing. By a processing (particularly, the radio wave arrival direction extraction processing) of the space filtering processing circuit 103, only an approximated direction of arrival DOA of radio waves is extracted from the signal SB, and a signal SD indicating the direction of arrival DOA of radio waves is obtained. In a processing (particularly, the sweep area extraction processing) of the space filtering processing circuit 103, an area signal (a sweep area to be described later) which is a limited part is extracted from the signal SB, and a signal SC indicating the sweep area is obtained.

The digital unit 3 executes, by the inverse FFT processing circuit 104, a space inverse FFT processing on the signal SC after the space filtering processing. The space inverse FFT processing corresponds to the space FFT processing. A signal SF of complex information returned to an original data shape is obtained by the space inverse FFT processing.

On the other hand, the radar device 1 selects an optimal pieces of calibration data (including a calibration matrix) from the plurality of pieces of calibration data 14 in the memory 12 based on the signal SD that indicates the direction of arrival DOA of radio waves extracted by the space filtering processing circuit 103. The radar device 1 selects one piece of calibration data from the plurality of pieces of calibration data 14 according to a value of the direction of arrival DOA of radio waves of the signal SD, and executes switching control to apply the calibration data to the calibration processing 105. At this time, in the configuration example in FIG. 3, the radar device 1 (the digital unit 3) selects, from the signal SD, a value of the one piece of calibration data corresponding to the value of the direction of arrival DOA of radio waves based on a correspondence relation set in a selection table T1. The radar device 1 inputs a selected control signal associated with a value of the selected calibration data into a control terminal of the switch 13. Each piece of calibration data (such as a corresponding address in the memory 12) of the plurality of pieces of calibration data 14 is read and connected to each of a plurality of input terminals of the switch 13, so that the calibration data can be input into the switch 13 . Corresponding to the selected control signal, the switch 13 selects one piece of calibration data (including a calibration matrix) from the plurality of pieces of calibration data 14 and outputs the selected calibration data from an output terminal. A signal SE corresponding to the calibration data selected and switched by the switch 14 is input into the calibration processing 105.

In other words, the digital unit 3 includes a selection circuit 110 that executes selection of calibration data, switching control, and the like. The selection circuit 110 includes the switch 13. Processings including the selection circuit 110 are implemented by a hardware circuit or the like in the digital unit 3, so that a processing can be executed at high speed. The selection circuit 110 and circuits in the digital unit 3 may be implemented by executing a software program processing by a processor.

As shown in FIG. 3, for example, a correspondence relation between a value (such as DOA1, DOA2, ... DOAn) of a direction of arrival DOA of radio waves of the signal SD and a value (such as CD1 (C1), CD2 (C2), ... CDn (Cn)) indicating calibration data (a calibration matrix) is pre-set in the selection table T1. In this example, a correspondence relation between a plurality of (n) directions of arrival DOA of radio waves and a plurality of (n) pieces of calibration data is set. The selection table T1 may include a set section in which the same calibration data is selected corresponding to two or more values of directions of arrival DOA of radio waves. The selection table T1 may be in a state of being described in advance in the selection circuit 110 or a program in the digital unit 3, or may be in a state of being stored in the memory 12 or the like and being referred to.

The digital unit 3 of the radar device 1 executes, by the calibration processing circuit 105, a calibration processing on complex information of the signal SF using the selected calibration data (the signal SE). The calibration processing circuit 105 is implemented as an array antenna error calibration circuit. A signal SG after the calibration processing is information in which errors in the array antenna 6 and the reception analog circuit 7 are eliminated or reduced.

The digital unit 3 executes, by the space averaging and wave number estimation processing circuit 106, a space averaging and wave number estimation processing on the signal SG after the calibration processing. The space averaging and wave number estimation processing is a necessary processing serving as a pre-processing of a super resolution processing using a MUSIC method or the like. In the space averaging and wave number estimation processing, a space average value and the number of waves (the number of incoming waves) are estimated by a predetermined calculation based on calibrated complex information of the signal SG.

In the digital unit 3, the super resolution processing circuit 107 executes a super resolution processing on a signal SH after the space averaging and wave number estimation processing. The super resolution processing is executed for each sweep area extracted from the signal SC. The super resolution processing is executed for each direction of arrival DOA of radio waves. The super resolution processing can be implemented as a high speed processing by executing a calculation processing limited only to the direction of arrival DOA of radio waves. By the super resolution processing, an angle indicating a direction of the target object 21 is calculated, and a signal SI indicating the angle is output as a part of the radar output information SOUT.

In the super resolution processing (a corresponding super resolution algorithm), in order to improve estimation accuracy of an angle, it is desirable to estimate the angle after the number of incoming waves (the number of waves) from the target object 21 is estimated. Therefore, the digital unit 3 according to the embodiment has a circuit configuration in which a processing of the super resolution processing circuit 107 is executed after a processing of the space averaging and wave number estimation processing circuit 106. The super resolution processing circuit 107 executes a calculation to estimate an angle using a space average value and the number of waves.

Further, different from the comparative example described above, the digital unit 3 of the radar device 1 according to the embodiment has a circuit configuration in which a calibration processing of the calibration processing circuit 105 is executed before a processing of the space averaging and wave number estimation processing circuit 106. Accordingly, since an error is eliminated or reduced in the signal SH at a time point before the super resolution processing in the embodiment, resolution in the signal SI of a result of the super resolution processing is prevented from deterioration.

In a modification, the radar device 1 may include a setting circuit that sets a plurality of pieces of calibration data 14, the selection table T1, and the like in the memory 12. The radar device 1 stores and sets the plurality of pieces of calibration data 14 and the like in the memory 12 by a processing of the setting circuit based on an operation from a user. A provider uses a computer to generate a calibration matrix based on experimental measurement performed in advance. The provider sets the calibration data 14 including the calibration matrix in the memory 12. The calibration data 14 is set as default setting information at a time of product shipment. After product shipment, the calibration data 14 in the memory 12 can be set and updated via the setting circuit.

### [(4) Array Antenna Error]

FIG. 4 schematically shows an example of directions of arrival of radio waves to the array antenna, errors occurring in the array antenna and the reception analog circuit in the radar device 1 according to the embodiment and the radar device according to the comparative example. In the example in FIG. 4, the array antenna includes eight reception antennas A1 to A8. The reception antennas A1 to A8 correspond to the reception antennas 61 to 6m in FIG. 2 according to the embodiment. A line of each reception antenna passes through a corresponding one of reception circuits in the reception analog circuit.

As shown in FIG. 4, phases between every two of a plurality of reception antennas ideally exhibit a regular phase difference corresponding to directions of arrival 402 of radio waves of reception signals. In FIG. 4, dashed lines (arrows) directed to reception antennas indicate the directions of arrival 402 (corresponding to the directions of arrival DOA of radio waves). Each dotted line across lines of directions of arrival 402 indicates in-phase 403 in a reception signal waveform. Although phases of radio waves in the reception antennas A1 to A8 are different, the phases have a regular phase difference. In this manner, when phases of reception signals of the array antenna 6 are regular phases, high resolution of an angle can be attained by executing a super resolution processing represented by a known MUSIC method or ESPRIT method.

However, in an actual radar device and an actual use situation, the phases of reception signals of the array antenna may not be such regular phases. That is, in practice, errors such as an amplitude/phase error 404, interference or mutual coupling 405, and a space error 406 occur among reception antennas of the array antenna. The space error 406 is an antenna interval error, and is an error from a design value of an interval among the plurality of reception antennas. Therefore, generally, high resolution cannot be attained even when a super resolution processing is executed on reception signals having such an error.

Calibration using a calibration matrix such as the calibration matrix in the example in NTL 1 is basically effective for the amplitude/phase error 404 and the mutual coupling 405. The calibration will be described below.

### [(5) Calibration Using Single Calibration Matrix]

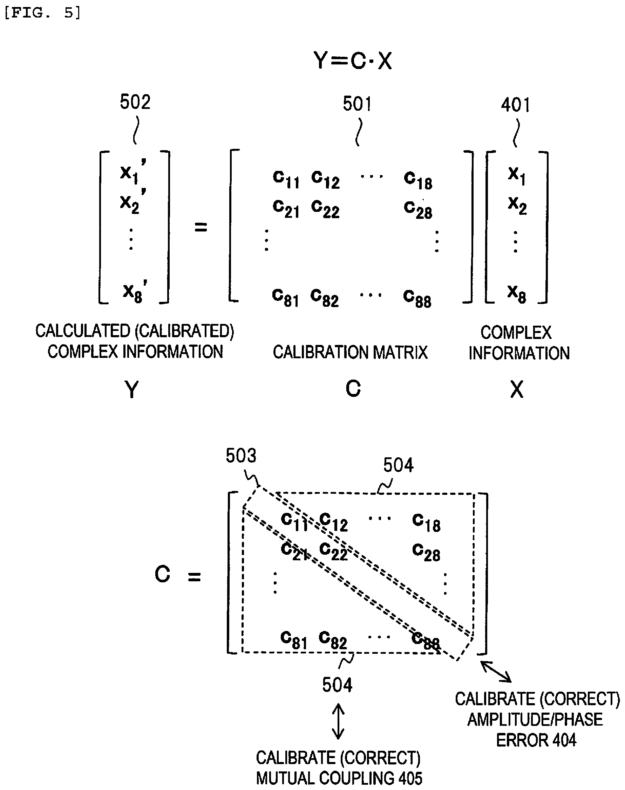

FIG. 5 shows a calibration processing using a single calibration matrix. FIG. 5 shows the complex information 401 (X), a calibration matrix 501 (C), and calibrated complex information 502 (Y) . The complex information 401 is a matrix X having one column. The calibration matrix 501 is a matrix C having a plurality of rows and a plurality of columns. The calibrated complex information 502 is a matrix Y having one column. In the example in FIG. 5, the matrix C has eight rows and eight columns or the like corresponding to the eight reception antennas A1 to A8 in FIG. 4. A calibration expression (matrix expression) is Y = CX. The radar device 1 calculates the calculated (that is, calibrated) complex information 502 (Y) by converting the complex information 401 (X) by the calibration matrix 501 (C) based on the expression.

The calibration matrix 501 (C) has diagonal components 503 and off-diagonal components 504. For example, the amplitude/phase error 404 is calibrated by the diagonal components 503 of the calibration matrix 501, and the mutual coupling 405 is calibrated by the off-diagonal components 504.

Here, in a case where the space error 406 or the like occurs in the array antenna 6, when the directions of arrival 402 change, the optimal calibration matrix 501 changes corresponding to the directions of arrival 402. The mutual coupling 405 or the amplitude/phase error 404 may also depend on the directions of arrival 402. In such a case, calibration cannot be executed sufficiently by the signal calibration matrix 501.

### [(6) Calibration Using A Plurality Of Calibration Matrices]

A solution to this problem is to prepare, store, and set calibration data (a plurality of pieces of calibration data 14) for directions of arrival of radio waves in advance in the memory 12 of the radar device 1 according to the embodiment. Then, the radar device 1 selects suitable calibration data corresponding to an estimation of a direction of arrival DOA of radio waves from reception signals, and applies the suitable calibration data to the calibration processing 105. Accordingly, even when different errors of the array antenna 6 corresponding to the directions of arrival DOA of radio waves occur in the embodiment, calibration for dealing with the errors can be executed with high accuracy. As a result, a super resolution processing that does not depend on the directions of arrival of radio waves can be executed with high accuracy.

An example of a method for generating the calibration data 14 for each direction of arrival of radio waves will be described as follows. A provider of the radar device 1 sets a target object in a known direction in advance in an environment such as an anechoic chamber, and performs measurement by the radar device 1. The provider uses a computer to grasp errors (different errors corresponding to the directions of arrival of radio waves) occurring in the measurement result and calculate and create calibration matrices each corresponding to a respective one of directions (the directions of arrival of radio waves) based on the errors. The provider sets a plurality of pieces of calibration data 14 including a plurality of calibration matrices in the memory 12 of the radar device 1. The provider may update the calibration data 14 in the memory 12 via the setting circuit corresponding to maintenance or the like.

### [(7) Comparative Example]

A configuration of a radar device according to a comparative example that executes calibration corresponding to a direction of arrival of radio waves may be a configuration in which the radar device switches, applies, and sweeps calibration data for each direction of arrival when directions of arrival are swept in a super resolution processing. However, performance deterioration occurs in a necessary space averaging and wave number estimation processing before the super resolution processing in the configuration of the radar device according to the comparative example. This is because the space averaging and wave number estimation processing is executed in a state before calibration in the configuration, and errors are present in signals in the state. In order to prevent performance deterioration, a calibration processing needs to be executed before the space averaging and wave number estimation processing. In the comparative example, since directions of arrival of radio waves are unknown, an optimal piece of calibration data corresponding to a direction of arrival of radio waves cannot be selected.

### [(8) Prediction Of Direction Of Arrival (Space FFT)]

As a solution to the problem in the comparative example, the radar device 1 according to the embodiment uses a processing of the space FFT processing circuit 102 to estimate a direction of arrival DOA of radio waves as an approximation. Compared with the comparative example, the radar device 1 according to the embodiment has a circuit configuration in which the calibration processing 105 is executed before the space averaging and wave number estimation processing 106. The radar device 1 has a configuration in which an optimal piece of calibration data is selected using a value of a direction of arrival DOA of radio waves estimated by the space FFT processing circuit 102 and extracted by the space filtering processing circuit 103. The space FFT processing circuit 102 is an example of a digital beam forming processing having a light calculation processing load. The space FFT processing is effectively applied as the digital beam forming processing. In the space FFT processing, although detection accuracy of directions of arrival of radio waves is not high, the calculation processing load is very light and the space FFT processing can be executed at high speed. The space FFT processing has low sensitivity on errors such as the amplitude/phase error 402, the mutual coupling 405, and the space error 406, and is less likely to be affected.

### [(9) Sweep Area Extraction]

Further, the radar device 1 according to the embodiment filters surrounding components of the estimated direction of arrival DOA of radio waves, and only extracts a signal component corresponding to the direction of arrival DOA of radio waves as a sweep area (the space filtering processing circuit 103 and the space inverse FFT processing circuit 104 in FIG. 3). Then, only the extracted signal component (corresponding sweep area) is subj ect to a subsequent processing such as a processing of the calibration processing circuit 105 in the radar device 1.

In the radar device 1, components other than the signal component (the sweep area) in the direction of arrival DOA of radio waves are assigned with zero or a predetermined low value. Accordingly, the space filtering processing after the space FFT processing can be easily implemented.

In the radar device 1, the complex information 401 after the space filtering processing can be generated by executing the space inverse FFT processing. In the radar device 1, a calibration processing is executed by applying calibration data (the signal SE) corresponding to a direction of arrival DOA of radio waves to the complex information 401 after the space filtering processing.

When the direction of arrival DOA of radio waves detected as an approximation in the space FFT processing includes a plurality of directions of arrival, the radar device 1 extracts only one direction of arrival by a processing of the space filtering processing circuit 103 and executes a subsequent signal processing.

The radar device 1 has a loop circuit configuration such as the digital unit 3 in FIG. 3, and repeats processings for each target direction of arrival of radio waves. In the loop, a processing from the super resolution processing circuit 107 is returned to the space filtering processing circuit 103 via the switch 15. When processings are repeated in the loop, the radar device 1 turns on the switch 15. When the switch 15 is turned on, an output signal SJ of the super resolution processing circuit 107 passes through the switch 15 and becomes an input signal SK of the space filtering processing circuit 103. The signal SJ is a signal indicating a processing state, a processing result, and the like related to a target direction of arrival of radio waves or the like.

The number of target objects that can be detected in a super resolution processing using a MUSIC method, an ESPRIT method, or the like depends on the number of reception antennas of the array antenna 6. Target objects having a larger number than the number of reception antennas can be detected using the repeated loop circuit configuration.

For example, in a first loop, based on information (the signals SG and SH) of a result calibrated by a first calibration matrix selected corresponding to a first direction of arrival, the super resolution processing circuit 107 executes a super resolution processing for each sweep area and calculates an angle. The same processing is repeated for each sweep area. In a subsequent second loop, based on information (the signals SG and SH) of a result calibrated by a second calibration matrix selected corresponding to a second direction of arrival, the super resolution processing circuit 107 executes a super resolution processing for each sweep area and calculates an angle.

When a plurality of (for example, eight) target objects 21 are present in substantially the same distance and the same direction with respect to a plurality of reception antennas of the array antenna 6, a calculation processing can be executed for the plurality of target objects 21 in one super resolution processing.

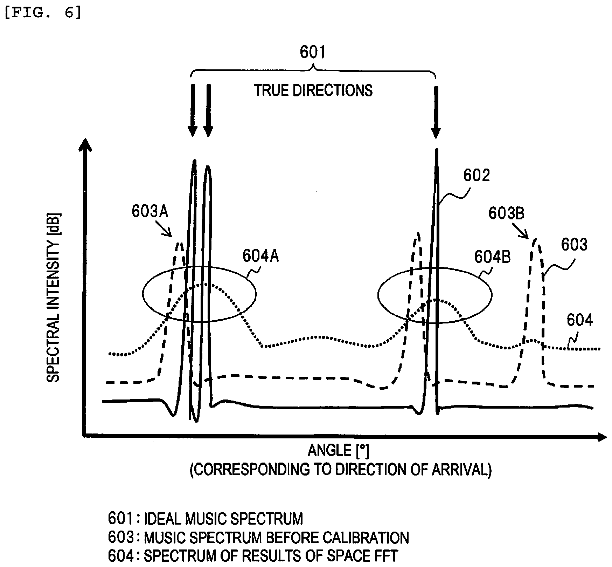

A more detailed example of an operation, a signal, and the like of the radar device 1 will be described with reference to FIG. 6 and subsequent figures.

### [(10) Spectrum Of Direction Of Arrival Of Radio Waves]

FIG. 6 shows an image diagram of a spectrum with respect to the direction of arrival DOA of radio waves described above, in which the spectrum corresponds to a spectrum of the signal SB after a processing of the space FFT processing circuit 102 in FIG. 3. A horizontal axis indicates an angle (°) corresponding to a direction of arrival of radio waves, and a vertical axis indicates a spectral intensity [dB]. Solid arrows in FIG. 6 indicate true directions 601. In this example, three directions of arrival associated with three target objects are shown. In this example, the MUSIC method is used in a super resolution processing.

A solid line waveform indicates an ideal MUSIC spectrum 602, and indicates a direction of arrival of a target object by a sharp spectrum. A broken line waveform indicates a MUSIC spectrum 603 before calibration when an error occurs in the array antenna 6. When the error occurs in the array antenna 6, since resolution based on the MUSIC method is reduced, there is a phenomenon (a part 603A) in which two target objects whose directions of arrival are close cannot be separated and detected and are detected as one target object or a phenomenon (a part 603B) in which a noise due to multipath or the like is erroneously detected as a target object.

A dotted waveform indicates a spectrum 604 of results of a space FFT (a processing of the space FFT processing circuit 102) when an error occurs in the array antenna 6. In the spectrum 604 of results of the space FFT, a sharp spectrum like the MUSIC spectrum 602 is not attained and only lower resolution is attained. Instead, in the spectrum 604 of results of the space FFT, even when an error occurs in the array antenna 6, an influence of the error is small, and the spectrum 604 of results of the space FFT appears as a spectrum (a part 604A and a part 604B in the spectrum 604) that approximately matches with the directions of arrival (the true directions 601). The spectrum 604 of results of the space FFT appears as a spectrum that corresponds to received electric power.

When the radar device 1 estimates and extracts a direction of arrival DOA of radio waves, for example, in an area in which a spectral intensity value is larger than a set threshold, a value such as a peak value and an intermediate value in the area may be a value of a direction of arrival.

Depending on a time point and a situation, a direction of arrival DOA of radio waves may include calculated values of a plurality of directions of arrival. Methods for processing the values of the plurality of directions of arrival may be as follows.
(1) In a first method, the radar device 1 selects and extracts only one suitable direction of arrival from the spectrum 604. For example, the first method is a method of selecting a largest value of a spectral intensity. In the example in FIG. 6, the part 604A is selected.
(2) In a second method, the radar device 1 selects and extracts values of a plurality of directions of arrival with a predetermined number (for example, two). In the example in FIG. 6, the part 604A and the part 604B are selected.
(3) In a third method, the radar device 1 selects and extracts values of a plurality of directions of arrival with a variable number that is allowed up to a predetermined maximum number.

For processing the extracted values of the plurality of directions of arrival, the radar device 1 uses a method of, for example, repeating processings sequentially in time for each of the values of directions of arrival in any order.

### [(11) Space FFT Spectrum And Sweep Area]

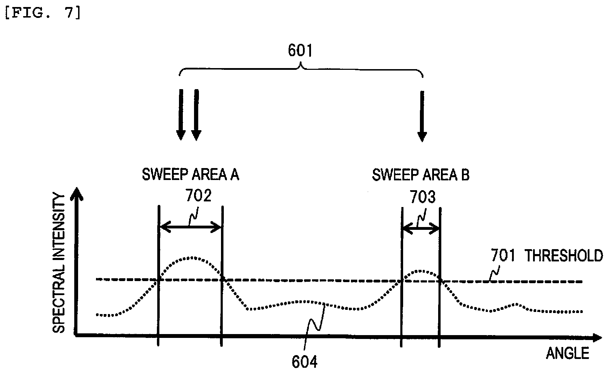

FIG. 7 shows a part of the spectrum 604 of results of the space FFT with respect to the true directions 601 shown in FIG. 6. Similar to FIG. 6, a horizontal axis indicates an angle and a vertical axis indicates a spectral intensity in FIG. 7. The radar device 1 sets a threshold 701 for the spectrum 604 after the space FFT processing. When a spectral intensity is larger than the threshold 701, the radar device 1 estimates and determines that the target object 21 is present (that is, a direction of arrival DOA of radio waves is present) in an area larger than the threshold 701.

The radar device 1 (in particular, the space filtering processing circuit 103) extracts the area larger than the threshold 701 as a sweep area related to a processing of the super resolution processing circuit 107. In the example in FIG. 7, two areas including a sweep area A (a sweep area 702) and a sweep area B (a sweep area 703) are extracted as sweep areas, and it is determined that the target object 21 is presented in each of the sweep areas.

At this time, a method for determining and setting the threshold 701 is as follows. In the radar device 1, the threshold 701 may be changed using, for example, distance information (the target distance selected in the target distance and speed selection processing 101 in FIG. 3) of the target object 21 at a corresponding time point and a signal-to-noise ratio (SN ratio). In other words, the threshold 701 is a threshold determined according to at least one of the target distance and the SN ratio. Accordingly, detection can be suitably executed corresponding to the target distance and the SN ratio, and erroneous detection due to noise caused by multipath or the like can be prevented. The SN ratio may use, for example, information calculated by the FFT processing circuit 81 in FIG. 3. Alternatively, in a modification, a preset static set value (a set value when the SN ratio or the target distance is considered to be a constant value) may be used as the threshold 701. It is also effective to use, for example, a method of determining a threshold using a known constant false alarm rate (CFAR).

### [(12) Processing For Sweep Area]

Subsequently, among the extracted plurality of (for example, two) sweep areas, the radar device 1 executes a processing (a processing of the calibration processing circuit 105, the super resolution processing circuit 107, or the like in FIG. 3) for each sweep area in any processing order. In this example, the radar device 1 first executes a processing for the sweep area A (the sweep area 702), and thereafter executes a processing for the sweep area B (the sweep area 703) .

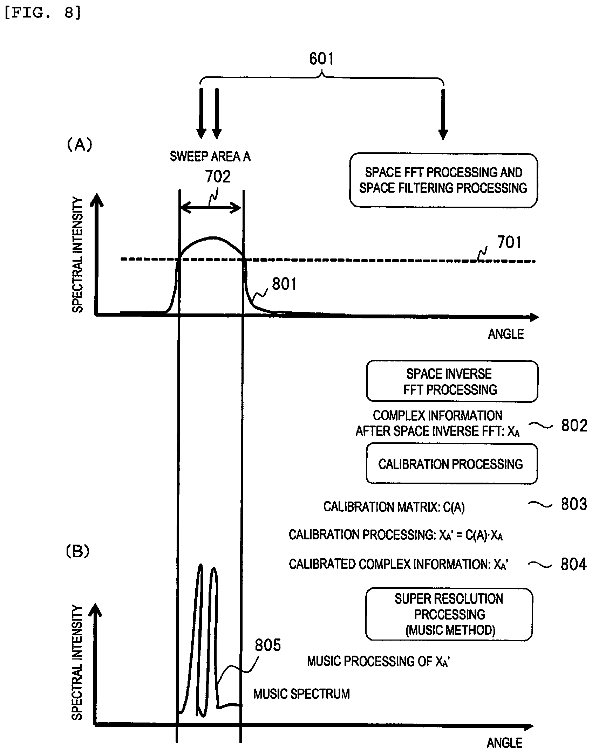

FIG. 8 shows states before and after a processing for the sweep area A. A graph (A) at an upper side of FIG. 8 shows a spectrum 801 obtained by extracting only the sweep area A (the sweep area 702) of the spectrum in FIG. 7 by the space FFT processing circuit 102, and executing a space filtering processing of replacing areas other than the sweep area A with zero or a predetermined low value by the space filtering processing circuit 103.

The radar device 1 derives complex information 802 (corresponding to the complex information 401 in FIG. 4) by executing a processing on the spectrum 801 by the space inverse FFT processing circuit 104. The complex information 803 is indicated by X_{A}.

For the complex information 802 (X_{A}), the radar device 1 selects an optimal calibration matrix 803 corresponding to the sweep area A (the sweep area 702), and executes a calibration processing by the calibration processing circuit 105. At this time, the calibration matrix 803 is indicated by C(A). "C(A)" refers to a matrix selected according to a direction of arrival corresponding to X_{A}. Similar to the matrix expression in FIG. 5, the calibration processing is expressed as X_{A}' = C(A) · XA. Calibrated complex information 804 is indicated by X_{A}'.

The radar device 1 executes the super resolution processing 107 (a MUSIC processing) on the calibrated complex information 804 (the signal SG in FIG. 3) using, for example, a MUSIC method. Accordingly, a MUSIC spectrum 805 indicating an angle is calculated (the signal SI is calculated). High resolution such as the MUSIC spectrum 805 can be achieved by executing calibration corresponding to a direction of arrival DOA of radio waves. The MUSIC spectrum 805 has a shape approximate to a shape of the ideal MUSIC spectrum 602 corresponding to the true directions 601 in FIG. 6. A calculation amount in the super resolution processing using the MUSIC method can be reduced by partially setting a sweep area of the MUSIC spectrum to the limited sweep area A (the sweep area 702).

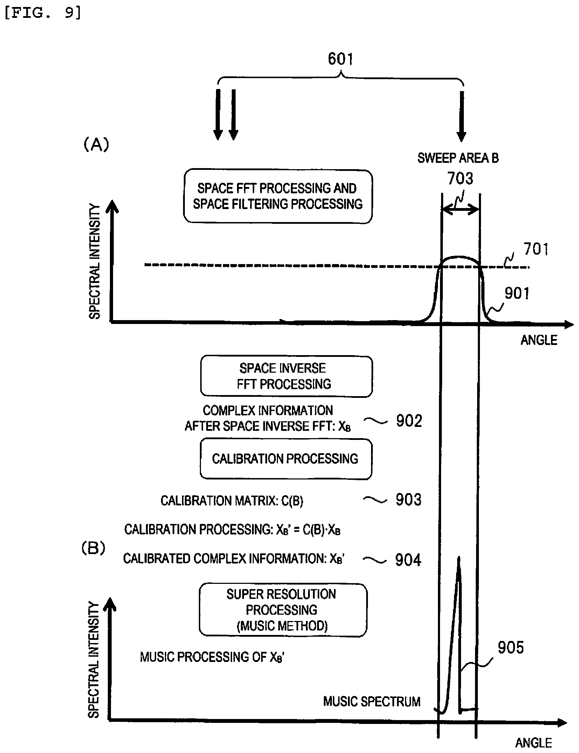

Subsequently, the radar device 1 executes a processing for the sweep area B (the sweep area 703) of the two sweep areas in the same manner as described above. FIG. 9 shows states before and after a processing for the sweep area B. A graph (A) at an upper side of FIG. 9 shows a spectrum 901 of results obtained by extracting only the sweep area B in FIG. 7 by the space FFT processing and executing a space filtering processing in the same manner as in FIG. 8. The radar device 1 derives complex information 902 (X_{B}) by executing a space inverse FFT processing on the spectrum 901. The radar device 1 applies an optimal calibration matrix 903 (= C(B)) selected corresponding to a direction of arrival of radio waves to the complex information 902 (X_{B}) to execute a calibration processing. Accordingly, calibrated complex information 904 (XB') is obtained. The radar device 1 executes a super resolution processing using the MUSIC method on the complex information 904. Accordingly, a MUSIC spectrum 905 can be attained with high accuracy.

### [Effects]

As described above, the radar device 1 according to the embodiment has a configuration that includes the array antenna 6 and executes a super resolution processing, and angle resolution can be maintained or improved by sufficient calibration even when different errors corresponding to directions of arrival of radio waves from the target object 21 occur. In this configuration, calculation deterioration in the super resolution processing is prevented. As a result, an angle can be obtained with stable and high resolution. In this configuration, unnecessary multipath or noises depending on directions of arrival of radio waves can be reduced. Further, in this configuration, a calculation may be executed by limiting the super resolution processing to only the pre-approximated direction of arrival of radio waves (a corresponding sweep area), so that it is also effective to reduce a calculation amount. Furthermore, in this configuration, it is possible to increase the number of target objects that can be detected depending on the number of reception antennas.

### [First Modification]

A modification of the embodiment may be implemented as follows . The radar device 1 according to the modification uses a method of generating and applying a more detailed piece of calibration data (a calibration matrix) by an interpolation processing based on calibration data for each of a plurality of predetermined directions of arrival of radio waves. The calibration data is stored in the memory 12 in advance and the number of pieces of calibration data is limited.

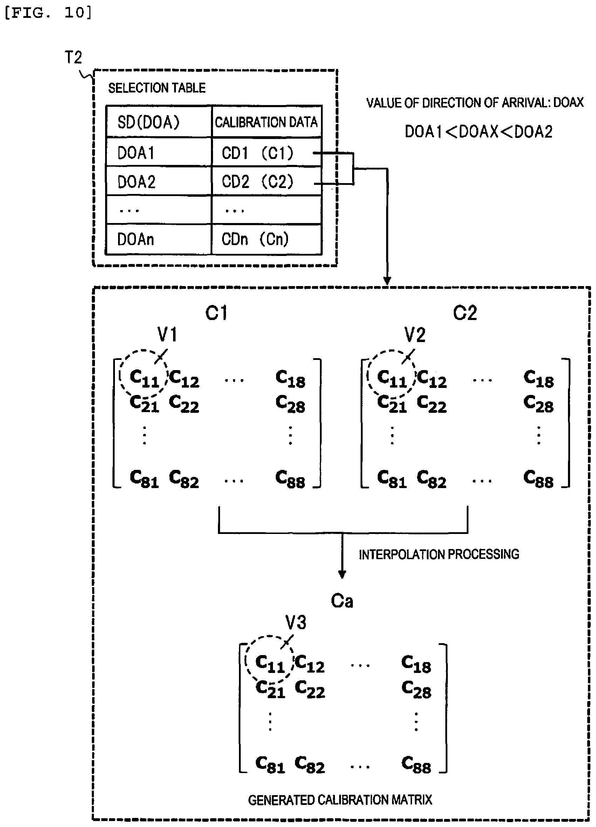

FIG. 10 is a diagram showing a method for selecting a calibration matrix in the radar device 1 according to the first modification. The radar device 1 includes a selection table T2 and a plurality of pieces of calibration data. The number of pieces of calibration data may be different from the number of pieces of calibration data in a case of the plurality of pieces of calibration data 14 described above (FIG. 3). When the radar device 1 selects one piece of calibration data corresponding to a value of the estimated direction of arrival DOA of radio waves based on the selection table T2, first, the radar device 1 selects, for example, two pieces of calibration data that are closest to the value of the direction of arrival DOA of radio waves. For example, the value of the direction of arrival DOA of radio waves estimated as an approximation by the space FFT processing 102 is defined as a certain value of a direction of arrival DOAX.

In the selection table T2, basically, calibration data (a calibration matrix) to be selected is defined corresponding to a value of each of a plurality of representative directions of arrival DOA of radio waves. A basic correspondence relation is defined, for example, first calibration data (a first calibration matrix C1) is selected for a value of a direction of arrival DOA1, and second calibration data (a second calibration matrix C2) is selected for a value of a direction of arrival DOA2. Values of the plurality of directions of arrival DOA of radio waves in the selection table T2 satisfy a magnitude relation (for example, DOA1 < DOA2 < ... < DOAn).

The radar device 1 selects a value of a direction of arrival in the selection table T2 based on the estimated value of a direction of arrival DOAX. For example, when the value of a direction of arrival DOAX is different from any value of a direction of arrival in the selection table T2, two closest values of directions of arrival are selected. For example, the value of a direction of arrival DOA1 and the value of a direction of arrival DOA2 are selected (DOA1 < DOAX < DOA2).

The radar device 1 refers to the first calibration matrix C1 corresponding to the value of a direction of arrival DOA1 and the second calibration matrix C2 corresponding to the value of a direction of arrival DOA2 according to the selection table T2. The radar device 1 applies, for example, a known linear interpolation processing which is an interpolation processing for values in each of the two calibration matrices C1 and C2. For example, a value c₁₁ in a first row and a first column of the calibration matrix C1 is defined as V1, and a value c₁₁ in a first row and a first column of the calibration matrix C2 is defined as V2. The radar device 1 obtains a linear interpolation value (referred to as a value V3) between the value V1 and the value V2 in the linear interpolation processing. For example, an interpolation coefficient is defined as A, and the value V3 can be calculated as: V3 = (A x V1 + (1 - A) x V2). Similarly, the radar device 1 obtains a linear interpolation value for each matrix value. The radar device 1 applies a new matrix Ca obtained in this manner as a calibration matrix to be selected at a corresponding time point.

In this modification, the number of the plurality of pieces of calibration data and a data volume that are set in the memory 12 can be reduced to a certain number and a certain data volume. Alternatively, in this modification, more detailed calibration data may be generated and applied based on a limited number of a plurality of pieces of calibration data.

### [Second Modification]

Although loop processings are repeated for each target direction of arrival of radio waves in the example of the circuit configuration of the digital unit 3 in FIG. 3, the invention is not limited thereto. In a circuit configuration of the digital unit 3 according to the modification, instead of a loop, a plurality of functional circuits such as the super resolution processing circuit 107 may be provided in parallel. Further, the digital unit 3 simultaneously executes a processing such as a super resolution processing in a plurality of circuits in parallel for a plurality of estimated directions of arrival.

In the radar device 1 according to the modification, the calibration processing circuits 105 in FIG. 3 may be provided in parallel to serve as a plurality of calibration processing circuits for different calibration matrices, and a calibration processing circuit to be used may be switched.

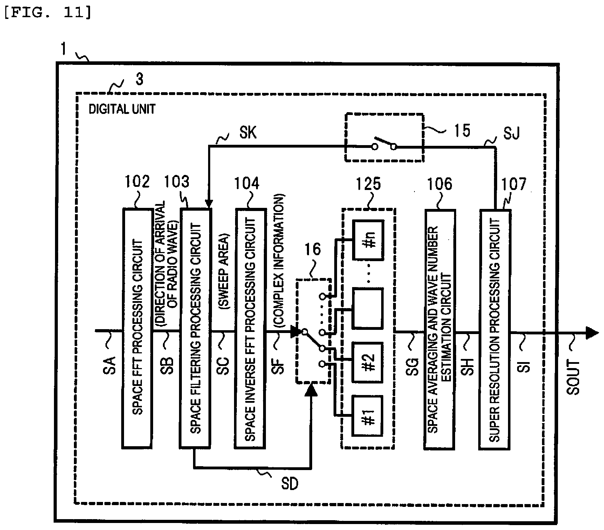

FIG. 11 shows a configuration example of a part of the digital unit 3 of the radar device 1 according to the modification. In this configuration example, a switch 16 is provided downstream of the space inverse FFT processing circuit 104, and a calibration processing circuit 125 is provided downstream of the switch 16. A plurality of calibration processing circuits (#1 to #n) are provided in parallel in the calibration processing circuit 125. A calibration matrix of each piece of calibration data of the plurality of pieces of calibration data 14 is implemented in advance in each of the plurality of calibration processing circuits. In this configuration example, the radar device 1 (the digital unit 3) switches a calibration processing circuit to be used by the switch 16 according to a value (the signal SD) of an estimated direction of arrival DOA of radio waves. A signal SG subjected to a calibration processing of the selected calibration processing circuit is input into a subsequent circuit. The same effects can also be attained in this modification.

Although the invention has been described in detail based on the embodiment, the invention is not limited to the embodiment described above, and various modifications can be made without departing from the scope of the invention.

### Reference Sign List

1 radar device
2 analog unit
3 digital unit
4 transmission antenna and transmission analog circuit
5 transmission unit
6 array antenna
7 reception analog circuit
8 distance measurement unit
9 direction calculation unit
12 memory
13 switch
14 a plurality of pieces of calibration data
15 switch
21 target object
22 vehicle
81 FFT processing circuit
101 target distance and speed selection processing circuit
102 space FFT processing circuit
103 space filtering processing circuit
104 space inverse FFT processing circuit
105 calibration processing circuit
106 space averaging and wave number estimation processing circuit
107 super resolution processing circuit
110 selection circuit
SR, S0 reception signal
SA, SB, SC, SD, SE, SF, SG, SH, SI, SJ, SK signal
T1 selection table
SOUT radar output information

## Claims

1. A radar device having a function of detecting an angle indicating a direction of a target object, the radar device comprising:
an array antenna including a plurality of reception antennas;
a reception analog circuit including a plurality of reception circuits connected to the plurality of reception antennas of the array antenna;
a digital circuit connected to the reception analog circuit; and
a memory that stores a plurality of pieces of calibration data set to calibrate an error occurring in the array antenna and the reception analog circuit, wherein
the digital circuit is configured to
approximate and extract a direction of arrival of radio waves from the target object by executing a digital beam forming processing on a digital signal of a reception signal that passes through the reception analog circuit,
select a piece of calibration data from the plurality of pieces of calibration data corresponding to the extracted direction of arrival of radio waves,
execute a calibration processing on the digital signal of the reception signal using the selected calibration data, and
execute a processing of calculating the angle based on a signal after the calibration processing.

2. The radar device according to claim 1, wherein
the plurality of pieces of calibration data each include a calibration matrix for each direction of arrival of radio waves of a plurality of directions of arrival of radio waves that are assumed in advance.

3. The radar device according to claim 1, wherein
the digital circuit is configured to execute a space averaging and wave number estimation processing based on the signal after the calibration processing and execute a super resolution processing serving as a processing of calculating the angle based on a signal after the space averaging and wave number estimation processing.

4. The radar device according to claim 1, wherein
the digital circuit is configured to
based on the extracted direction of arrival of radio waves, execute a filtering processing on the digital signal and extract a signal in a limited area,
execute the calibration processing on the signal in the area using the selected calibration data, and
execute a super resolution processing serving as a processing of calculating the angle on the signal in the area after the calibration processing.

5. The radar device according to claim 4, wherein
the digital circuit is configured to
execute a space FFT processing serving as the digital beam forming processing, and
execute a space inverse FFT processing on a signal after the filtering processing.

6. The radar device according to claim 4, wherein
the digital circuit is configured to extract the signal in the area during the filtering processing using a threshold corresponding to at least one of a target distance or a signal-to-noise ratio.

7. The radar device according to claim 1, wherein
the digital circuit is configured to repeat selection of the calibration data, the calibration processing, and the processing of calculating the angle for each extracted direction of arrival of radio waves.

8. The radar device according to claim 2, wherein
the digital circuit is provided with a selection circuit including a switch, and
the selection circuit is configured to select the calibration data from the plurality of pieces of calibration data in the memory corresponding to a value of the extracted direction of arrival of radio waves, and switch the plurality of pieces of calibration data to apply the calibration data to the calibration processing.

9. The radar device according to claim 1, wherein
the digital circuit is configured to select one or more pieces of calibration data from the plurality of pieces of calibration data in the memory corresponding to a value of the extracted direction of arrival of radio waves, generate calibration data by executing an interpolation processing on a value of the selected one or more pieces of calibration data, and apply the generated calibration data to the calibration processing.

10. A radar device having a function of detecting an angle indicating a direction of a target object, the radar device comprising:
an array antenna including a plurality of reception antennas;
a reception analog circuit including a plurality of reception circuits connected to the plurality of reception antennas of the array antenna; and
a digital circuit connected to the reception analog circuit, wherein
the digital circuit
is provided with a plurality of calibration processing circuits corresponding to a plurality of pieces of calibration data for calibrating an error occurring in the array antenna and the reception analog circuit,
is configured to approximate and extract a direction of arrival of radio waves from the target object by executing a digital beam forming processing on a digital signal of a reception signal that passes through the reception analog circuit,
is configured to select a calibration processing circuit from the plurality of calibration processing circuits corresponding to the extracted direction of arrival of radio waves, and execute a calibration processing on the digital signal of the reception signal using the selected calibration processing circuit, and
is configured to execute a processing of calculating the angle based on a signal after the calibration processing.

11. The radar device according to claim 1, wherein
the error includes a signal amplitude/phase error, mutual coupling, and a space error related to an antenna interval in the plurality of reception antennas and the plurality of reception circuits.

12. A radar system comprising:
a radar device having a function of detecting an angle indicating a direction of a target object; and
a moving object mounted with the radar device, wherein
the radar device includes
an array antenna including a plurality of reception antennas,
a reception analog circuit including a plurality of reception circuits connected to the plurality of reception antennas of the array antenna,
a digital circuit connected to the reception analog circuit, and
a memory that stores a plurality of pieces of calibration data set to calibrate an error occurring in the array antenna and the reception analog circuit,
the digital circuit is configured to
approximate and extract a direction of arrival of radio waves from the target object by executing a digital beam forming processing on a digital signal of a reception signal that passes through the reception analog circuit,
select a piece of calibration data from the plurality of pieces of calibration data corresponding to the extracted direction of arrival of radio waves,
execute a calibration processing on the digital signal of the reception signal using the selected calibration data, and
execute a processing of calculating the angle based on a signal after the calibration processing, and
the moving object controls the moving object using output information of the radar device including the angle.
